# EUROPEAN PATENT APPLICATION

(11) **EP 2 765 548 A1**
(43) Date of publication of application: **13.08.2014**
(21) Application number: 14152488.4
(22) Date of filing: 24.01.2014
(51) Int. Cl.: G06Q 10/08

(54) **System and method for managing cargo transfer operations at a cargo distribution terminal**

(30) Priority: 11.02.2013 US 201313764330
(71) Applicant: Honeywell International Inc., Morristown, NJ 07962-2245 (US)
(72) Inventor: Ranganathan, Sriram, Morristown, NJ New Jersey 07962-2245 (US); Sankaranarayanan, Sridhar, Morristown, NJ New Jersey 07962-2245 (US); Nagalla, Narendra, Morristown, NJ New Jersey 07962-2245 (US)
(74) Representative: Houghton, Mark Phillip

(57) **Abstract**

A method includes receiving (501) a request associated with loading or unloading of cargo at a terminal (100). The method also includes determining (503) a recommended slot in response to the request, where the recommended slot includes a time slot for loading the cargo onto a cargo vehicle or unloading the cargo from the cargo vehicle. In addition, the method includes transmitting (505) the recommended slot for delivery to a mobile device (320) of an operator of the cargo vehicle. The method may also include receiving (509) a signal from the mobile device to open an entrance of the terminal when the cargo vehicle arrives at the terminal and, in response to the signal, opening the entrance of the terminal to allow the cargo vehicle to enter the terminal.

## Description

### TECHNICAL FIELD

This disclosure relates generally to cargo shipping and distribution. More specifically, this disclosure relates to a system and method for managing cargo transfer operations at a cargo distribution terminal.

### BACKGROUND

Throughout history, the shipment and distribution of goods have remained essential elements of commerce. Movement of goods from one location to another often involves the loading or unloading of cargo at a distribution terminal, such as a warehouse or port. The cargo is unloaded from and loaded to cargo transporting vehicles, such as trucks, trains, and ships. Due to the frequent arrival and departure of many cargo transporting vehicles and a limited number of cargo bays, some distribution terminals often have to contend with significant bottlenecks. These bottlenecks may result in long idle periods for some cargo transporting vehicles as they wait for an available cargo bay in which to load or unload cargo.

### SUMMARY

This disclosure provides a system and method for managing cargo transfer operations at a cargo distribution terminal.

In a first embodiment, a method includes receiving a request associated with loading or unloading of cargo at a terminal. The method also includes determining a recommended slot in response to the request, where the recommended slot includes a time slot for loading the cargo onto a cargo vehicle or unloading the cargo from the cargo vehicle. In addition, the method includes transmitting the recommended slot for delivery to a mobile device of an operator of the cargo vehicle.

In a second embodiment, a system includes at least one interface configured to receive a request associated with loading or unloading of cargo at a terminal. The system also includes at least one processing device configured to determine a recommended slot in response to the request, where the recommended slot includes a time slot for loading the cargo onto a cargo vehicle or unloading the cargo from the cargo vehicle. The at least one processing device is also configured to initiate transmission of the recommended slot for delivery to a mobile device of an operator of the cargo vehicle.

In a third embodiment, a non-transitory computer readable medium is encoded with a computer program. The computer program includes computer readable program code for receiving a request associated with loading or unloading of cargo at a terminal. The computer program also includes computer readable program code for determining a recommended slot in response to the request, where the recommended slot includes a time slot for loading the cargo onto a cargo vehicle or unloading the cargo from the cargo vehicle. The computer program further includes computer readable program code for transmitting the recommended slot for delivery to a mobile device of an operator of the cargo vehicle.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example cargo distribution terminal that receives cargo from or provides cargo to a number of cargo vehicles in accordance with this disclosure;
FIGURE 2 illustrates an example backlog at a cargo distribution terminal in accordance with this disclosure;
FIGURE 3 illustrates an example terminal automation system in accordance with this disclosure;
FIGURE 4 illustrates an example user interface in a slot booking system in accordance with this disclosure; and
FIGURE 5 illustrates an example method for managing a cargo transfer at a cargo distribution terminal in accordance with this disclosure.

### DETAILED DESCRIPTION

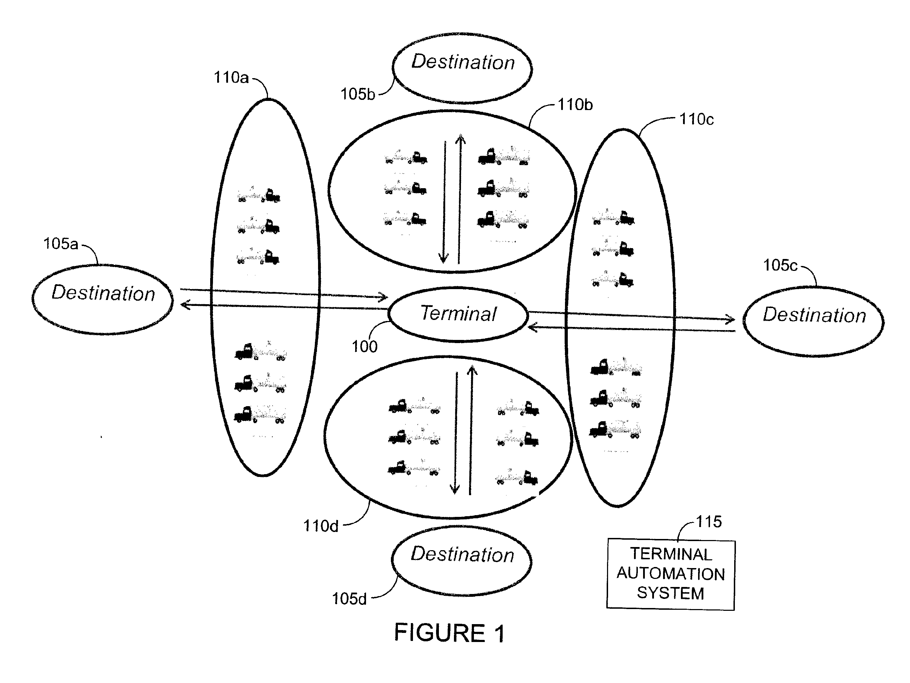

FIGURES 1 through 5, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

FIGURE 1 illustrates an example cargo distribution terminal 100 that receives cargo from or provides cargo to a number of cargo vehicles in accordance with this disclosure. The terminal 100 generally represents any suitable terminal used to receive, store, and distribute one or more products, such as petroleum products. The terminal 100 receives shipments of cargo from or provides cargo to a number of cargo vehicles, such as trucks, for delivery to or from a number of destinations 105a-105d. The cargo vehicles may be associated with different carrier companies 110a-110d.

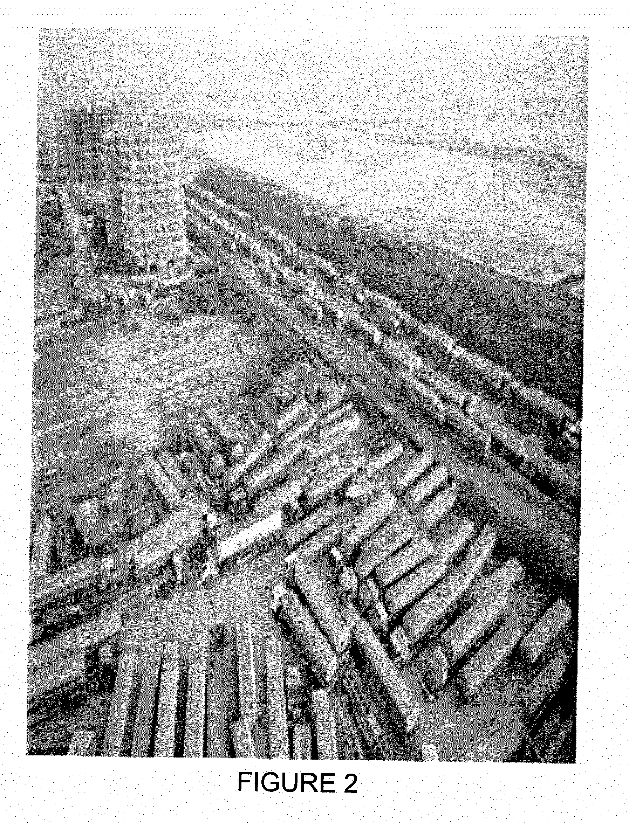

In many cases, it is difficult for carrier companies 110a-110d to plan the time that their vehicles are to visit a terminal for cargo loading or unloading. Due to the lack of ability to schedule in some cases, the vehicles simply arrive at the terminal and wait for an available cargo bay. The vehicles are usually admitted on a first-come, first-served basis. This may result in a large backlog of vehicles waiting outside the terminal. An example of such a backlog at a terminal is shown in FIGURE 2. There are, of course, security and safety hazards associated with having too many vehicles waiting at or outside of the entry to a terminal. As a consequence, the owners or operators of the terminal may expend significant financial resources on security equipment, such as security cameras, to monitor conditions outside of the terminal's property.

Likewise, some terminals are not able to inform the carrier companies 110a-110d or vehicles when issues arise with the availability of a product or a maintenance issue at one of the cargo bays at the terminal. Due to a significant amount of manual "on-the-fly" operations, some terminals do not have much flexibility to reschedule deliveries when disturbances occur in their planning. This also may result in queuing outside the bay areas or the terminal.

To mitigate the backlog, some terminals invest significant financial and personnel resources in solutions such as:
- public display boards, similar to those found at airports, that direct vehicles into the terminal for loading or unloading;
- cargo load offices staffed with personnel to monitor the vehicles arriving and departing;
- technology, such as data entry terminals (DETs) and card readers, to record each operator or vehicle upon arrival;
- logistical planning for each cargo bay; and
- printers and infrastructure required for printing of filling advisory notes (FANs) and bills of lading (BOLs). A FAN informs a vehicle operator as to which cargo bay at the terminal that cargo will be filled or loaded onto a vehicle.

Each of these solutions has its own disadvantages. For example, the hardware platforms for the DETs and card readers often need to be regularly maintained and upgraded, which can require service contracts with multiple vendors to safeguard the investments made for the infrastructure. Logistical planning tends to be very time consuming and error prone. Printers are subject to failures, resulting in a larger backlog of vehicles outside the terminal.

To help resolve these issues, a terminal automation system (TAS) 115 is provided for use with a cargo terminal 100. The TAS 115 can be installed at the terminal 100, or the TAS 115 can be installed remotely (such as on a server accessible over a network like the Internet). The TAS 115 features a slot booking system configured to provide an optimal arrangement of time slot assignments. The TAS 115 can be used in conjunction with mobile technology, such as applications loaded onto operators' mobile phones. The TAS 115 can also be used in conjunction with electronic forms, including digitally-signed FANs and BOLs.

In this disclosure, reference may be made to the cargo vehicles as trucks and to vehicle operators as drivers. However, this disclosure is not limited to use with cargo terminals that receive and provide cargo to trucks. The principles disclosed here are applicable to terminals that operate with other cargo-transporting vehicles, such as trains, aircraft, or sea craft. Accordingly, "operators" of vehicles include drivers, pilots, engineers, captains, and the like. Likewise, "terminals" include truck terminals, airports, sea ports, rail yards, and the like.

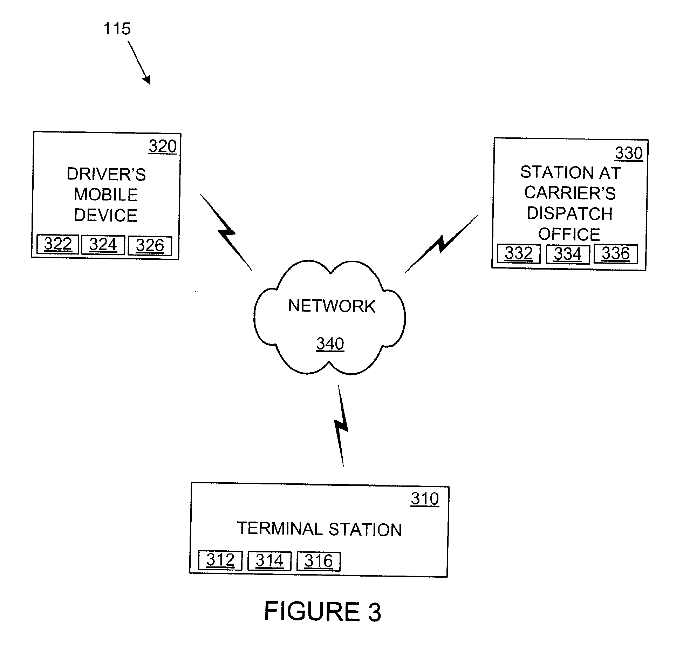

FIGURE 3 illustrates an example terminal automation system (TAS) 115 in accordance with this disclosure. The embodiment of the TAS 115 shown in FIGURE 3 is for illustration only. Other embodiments of the TAS 115 may be used without departing from the scope of this disclosure.

As shown in FIGURE 3, the TAS 115 includes a terminal station 310, a mobile device 320 associated with a vehicle operator, and a user station 330 at a dispatch office for the carrier company of the vehicle operator. The terminal station 310, the mobile device 320, and the carrier company station 330 may communicate with each other through a network 340.

The terminal station 310 represents one or more computing or communication devices that execute a slot booking system for scheduling and managing assignments of time slots and cargo bay slots at the terminal as described in greater detail below. The terminal station 310 includes any suitable structure for controlling the slot booking system. The terminal station 310 could, for example, include one or more processing devices 312, such as one or more microprocessors. The terminal station 310 could also include one or more memories 314 storing instructions and data used, collected, or generated by the processing device(s) 312. The terminal station 310 could further include one or more interfaces 316 supporting communication to and from the terminal station 310 over the network 340, such as a wired Ethernet interface or a wireless transceiver. The terminal station 310 is configured to transmit and receive information associated with terminal slot booking to/from the mobile devices 320 and the carrier company stations 330 via the network 340 as described below.

Each mobile device 320 represents a portable mobile device, such as a cell phone, smart phone, personal digital assistant (PDA), laptop computer, notebook computer, tablet computer, and the like. Each mobile device 320 supports and executes one or more applications associated with the slot booking system. Each mobile device 320 includes any suitable structure for executing one or more applications associated with a slot booking system. Each mobile device 320 could, for example, include one or more processing devices 322, one or more memories 324, and one or more interfaces 326. Each mobile device 320 is configured to transmit and receive information associated with terminal slot booking to/from the terminal station 310 and the carrier company station 330 via the network 340 as described below. In some embodiments, each mobile device 320 communicates via SMS (Short Message Service), MMS (Multimedia Messaging Service), or both.

Each carrier company station 330 represents one or more computing or communication devices providing user access to one or more applications associated with the slot booking system. For example, each carrier company station 330 may include a desktop computer, server, or a mobile device such as a laptop computer, notebook computer, tablet computer, and the like. The carrier company station 330 includes any suitable structure for executing one or more applications associated with a slot booking system. Each carrier company station 330 could, for example, include one or more processing units 332, one or more memories 334, and one or more interfaces 336. Each carrier company station 330 is configured to transmit and receive information associated with terminal slot booking to/from the terminal station 310 and the mobile devices 320 via the network 340 as described below.

The network 340 facilitates communication between the terminal station 310, the mobile devices 320, and the carrier company stations 330. For example, the network 340 may communicate Internet Protocol (IP) packets, frame relay frames, Asynchronous Transfer Mode (ATM) cells, or other information between network addresses. The network 340 may include one or more carrier-based cellular networks, local area networks (LANs), metropolitan area networks (MANs), wide area networks (WANs), all or a portion of a global network such as the Internet, or any other communication system or systems at one or more locations.

In one aspect of operation, the TAS 115 uses the slot booking system for managing and assigning time slots and cargo bay slots at a terminal. The slot booking system includes one or more algorithms for optimal booking (reserving), planning, selling, and trading of time slots and cargo bay slots. The algorithms use one or more cost functions that receive related parameters as inputs. The cost functions in the algorithms execute based on the input parameters to arrive at an optimal slot booking arrangement.

In some embodiments, an algorithm executed at the terminal station 310 determines an optimal arrangement of time slot assignments for time slot booking based on various parameters, such as product availability (when a particular product is available for loading in a certain terminal bay) and existing traffic into and out of the terminal. Once an optimal time slot has been determined for a given cargo vehicle, the time slot can be assigned, and the assignment information is transmitted to the vehicle operator via the operator's mobile device 320 or to the carrier company station 330. Based on the time slot assignment information, the vehicle operator knows what time to arrive at the terminal and to which bay in the terminal to proceed upon arrival at the terminal.

In some embodiments, the algorithm determines and communicates a time slot to a vehicle operator and schedules a cargo bay for loading or unloading, which could be done when the vehicle operator arrives at the terminal. In other embodiments, the algorithm determines both the time slot and the terminal bay and communicates both to the vehicle operator. Thus, the vehicle operator does not need to wait in order to schedule a cargo bay upon arrival at the terminal. In particular embodiments, the communication is from the terminal station 310 to the operator's mobile device 320. In other embodiments, the communication is from the terminal station 310 to the carrier company station 330 at the dispatch office. The dispatch office may then schedule time slot information (if it is not already scheduled) and communicate the time slot information to the operator's mobile device 320.

All or portions of the slot booking system may be stored and executed on the terminal station 310, the operator mobile devices 320, the carrier company stations 330, or any combination thereof. When the slot booking system is stored and executed on the mobile device(s) 320, the slot booking system may be an application ("app") that is downloaded to the mobile device 320 after the mobile device 320 has registered with the terminal. The application on the mobile device 320 may also include control functions that allow the mobile device 320 to control an entry gate at the terminal. For example, when a vehicle operator arrives at the terminal in a vehicle, the operator may initiate a function on the mobile device 320 or place a phone call to the terminal from the mobile device 320. This causes a boom barrier at the entry gate of the terminal to open automatically, thereby allowing the vehicle entry to the terminal. This function in the mobile device 320 eliminates the need for a separate identification mechanism at the entry gate. The application on the mobile device 320 may further be integrated with GPS (global positioning system) or other location sensing functions of the mobile device 320. The integration with location sensing functions allows the slot booking system to use the operator's location as an input parameter in slot booking. For example, when a user of the carrier company station 330 plans to schedule a time slot at the terminal for one of the carrier's vehicles, the slot booking algorithm may schedule an earlier slot for a vehicle that is identified as being closer to the terminal. Conversely, a vehicle that is identified as being further from the terminal may be scheduled for a later time slot. Additional details regarding the functionality of the slot booking system are provided below.

In addition, the TAS 115 supports the use of digital forms. Other management systems at cargo terminals typically rely on paper forms that are manually signed by vehicle operators or terminal representatives. Copies of the signed forms are provided to the vehicle operators or mailed to the carrier companies. In contrast, the TAS 115 integrates digital forms in cargo loading/unloading operations. For example, when a vehicle operator loads cargo at a terminal using the TAS 115, a digital version of a FAN, BOL, or both may be provided at the terminal station 310, the operator's mobile device 320, the carrier company station 330, or any combination of these. As a particular example, a vehicle operator may electronically sign a digital BOL at the terminal station 310. An electronic copy of the digitally-signed BOL is transmitted to the operator's mobile device 320 and the carrier company station 330. Thus, any forms or documents associated with cargo loading or unloading may be electronically produced, signed, and distributed using the TAS 115, thereby reducing reliance on paper forms.

Although FIGURE 3 illustrates one example of a terminal automation system 115, various changes may be made to FIGURE 3. For example, the TAS 115 could include any number of terminal stations, mobile devices, carrier company stations, applications, and other components. Also, the makeup and arrangement of the TAS 115 is for illustration only. Components could be added, omitted, combined, or placed in any other configuration according to particular needs. Further, while described as being used to manage slot booking at the terminal, the TAS 115 could be used in any other manner.

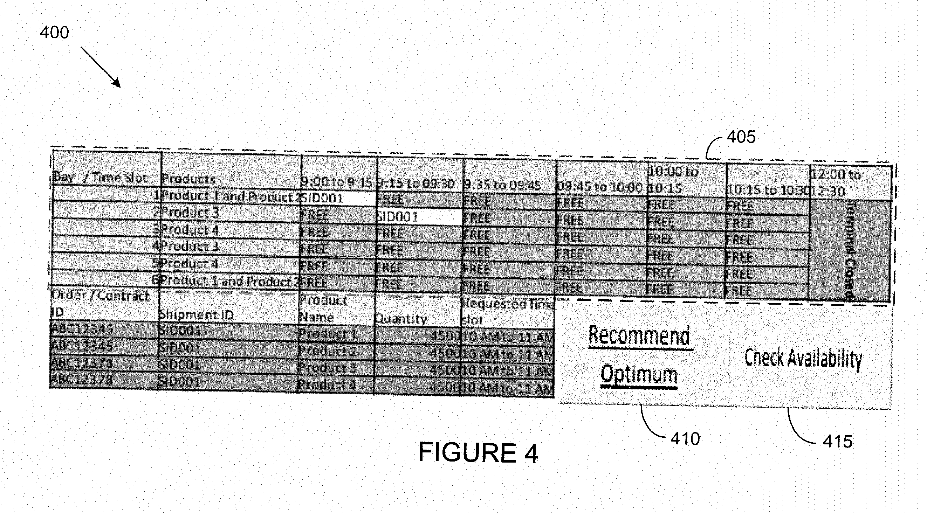

FIGURE 4 illustrates an example user interface 400 in a slot booking system in accordance with this disclosure. The embodiment of the user interface 400 shown in FIGURE 4 is for illustration only. Other embodiments of the user interface 400 may be used without departing from the scope of this disclosure. The user interface 400 may be used in connection with a terminal automation system, such as the TAS 115 shown in FIGURE 3.

As shown in FIGURE 4, the user interface 400 includes a slot booking interface 405, a recommendation control 410, and a check availability control 415. The slot booking interface 405 includes fields and data arranged to associate cargo bays at a terminal, products or cargo to load or unload at the terminal, time slots during operating hours of the terminal, cargo vehicles or shipments, and any other suitable information. In the embodiment shown in FIGURE 4, the slot booking interface 405 includes a table having cargo bays on one axis and time slots on another axis. The table includes fields that may be populated manually by a user of the slot booking system or automatically by the slot booking system based on execution of one or more algorithms.

The recommendation control 410 may be invoked by a user to trigger execution of one or more algorithms that determine an optimal time slot for a cargo transfer (load or unload). The optimal time slot may be determined based on a number of input parameters, such as a preferred time slot, product availability (when a particular product is available for loading in a certain terminal bay), and a measurement of existing traffic in and out of the terminal. The optimal time slot may be communicated to a vehicle operator as an assigned time slot or recommended time slot.

The check availability control 415 may be invoked by a user to check the availability of one or more slots for a particular cargo vehicle, cargo product, or cargo amount/quantity. This may allow a user to determine whether a particular vehicle, product, or amount/quantity can be loaded or unloaded in the terminal.

Although FIGURE 4 illustrates one example of a user interface 400 in a slot booking system, various changes may be made to FIGURE 4. For example, the user interface 400 could include any number of fields, tables, controls, or other suitable user interface components. Also, the makeup and arrangement of the user interface 400 is for illustration only. Data elements and controls could be added, omitted, combined, or placed in any other configuration according to particular needs.

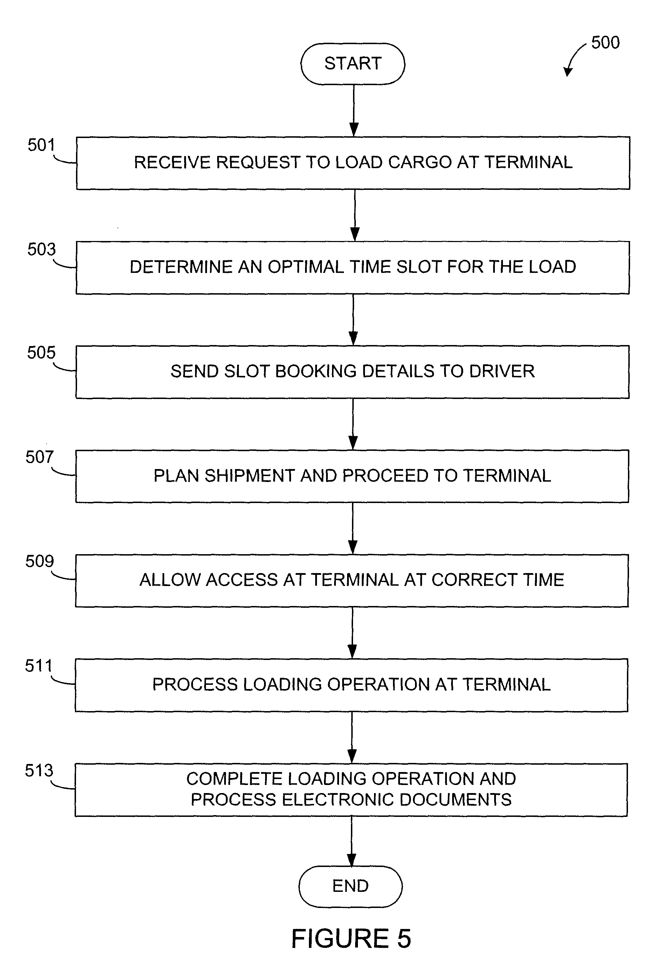

FIGURE 5 illustrates an example method 500 for managing a cargo transfer at a cargo distribution terminal in accordance with this disclosure. The method 500 may be performed in association with a terminal automation system, such as the TAS 115 of FIGURE 3, and with a slot booking user interface, such as the interface 400 of FIGURE 4. The method 500 could be used with any other system or interface.

At step 501, the TAS at the terminal receives a request from a vehicle operator or carrier company to load or unload cargo at the terminal. The request may come from an operator's mobile device that is registered with the TAS or from a station at the carrier company office. The request may include a preferred time slot.

At step 503, the TAS executes one or more slot booking algorithms to determine an optimal time slot for the vehicle operator. The optimal time slot may be determined based on a number of input parameters, such as a preferred time slot, product availability, a current location of the vehicle, and a measurement of existing traffic in and out of the terminal.

At step 505, the TAS sends slot booking details, including the recommended optimal time, to the operator's registered mobile device, the carrier office, or both. The mobile device receives electronic documents and slot booking details from the carrier company or the terminal. The slot booking details may include the time band within which the operator should arrive at the terminal. The documents and details may be received via SMS/MMS.

At step 507, based on the provided documents and details, the vehicle operator may plan his or her shipment using a TAS application loaded on the operator's mobile device. For example, the vehicle operator may use the application to plan what cargo is to be loaded in which compartment in the vehicle. The vehicle operator then proceeds with these details to the terminal.

At step 509, upon arrival at the terminal at the correct time, the vehicle operator is allowed access to the terminal, as his or her time slot is pre-planned. In some embodiments, the vehicle operator activates a control or dials a telephone number from his or her mobile device to initiate opening of the gate. Any errors may be communicated via messaging or other mechanism back to the operator's mobile device. In other embodiments, the vehicle operator operates an interactive voice response system (IVRS)-enabled telephone system at the entry gate. Using the IVRS, the vehicle operator identifies himself or herself and performs a menu-driven procedure to do compartment planning before entering the terminal.

At step 511, the vehicle operator proceeds to the correct cargo bay at the terminal and loads or unloads cargo. In some embodiments, the cargo may be a type of petroleum product, such as gasoline, kerosene, diesel fuel, or jet fuel. Of course, any other suitable cargo could be loaded or unloaded.

At step 513, the vehicle operator completes the loading/unloading process, including reviewing and signing electronic documents (such as FAN, BOL, and the like). The TAS automatically transmits a copy of the electronic documents to the operator's mobile device, the carrier company office, or both after successful completion of loading/unloading. The vehicle operator can proceed to the terminal exit.

Although FIGURE 5 illustrates one example of a method 500 for managing a cargo transfer at a cargo distribution terminal, various changes may be made to FIGURE 5. For example, while shown as a series of steps, various steps shown in FIGURE 5 could overlap, occur in parallel, or occur multiple times. Moreover, some steps could be combined or removed and additional steps could be added.

Various embodiments of the terminal automation system described above may provide a number of benefits to a terminal operator. For example, the terminal automation system allows a vehicle operator to avoid spending unnecessary time interacting with a batch controller unit (BCU) at a terminal in order to plan a shipment. The BCU is microprocessor-based electronic equipment installed at a bay that monitors and controls the loading or unloading of products into or from a vehicle. Instead of using the BCU, operators use their own mobile devices for advanced planning and saving of data.

As another example, a terminal can reduce its reliance on data entry terminals, public display boards, and reception offices. Instead, the terminal tracks vehicles using GPS or other location tracking mechanisms and re-schedules loading/unloading based on intelligent algorithms. Likewise, the operators use their own mobile devices to open and close gates. Additionally, a terminal may decrease its investment in printers and offices, as many documents (such as BOLs and FANs) are digitally certified and delivered.

As yet another example, the terminal automation system helps to reduce crowding, and the terminal is operated more efficiently. This improves terminal safety by not allowing crowding at terminals, decreases the work force required to operate and manage terminals, and improves supply chain efficiency. In some embodiments, terminals may generate additional revenue and encourage timely arrivals by assessing penalties for early or late arrivals.

The terminal automation system described above may provide a number of benefits to customers and carrier companies, as well. For example, a carrier company has more flexibility in planning and rescheduling shipments, thereby reducing or avoiding operator and vehicle idling and increasing product delivery. This flexibility also allows the carrier company to make changes to a plan in case the terminal has operational difficulties. As another benefit, the carrier company has real-time information of the status of each vehicle in a terminal. Since information is managed electronically, there are no lengthy documents to be carried. Digitally-signed BOLs, FANs, and other documents can be copied to the carrier company and the customer, as well as compliance authorities. Additionally, each carrier may be able to generate revenue by "slot trading" with other carrier companies.

Overall, the terminal automation system can provide an overall reduction in the total cost of ownership to the end user, a better and more reliable solution to a terminal's operators, and financial and temporal savings for all parties. Additionally, end users of the terminal automation system are encouraged to become "front runners" in adopting new technology, thereby differentiating themselves from their peers.

In some embodiments, various functions described above are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system, or part thereof that controls at least one operation. A controller may be implemented in hardware or a combination of hardware and software/firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method comprising:
receiving (501) a request associated with loading or unloading of cargo at a terminal (100);
determining (503) a recommended slot in response to the request, the recommended slot comprising a time slot for loading the cargo onto a cargo vehicle or unloading the cargo from the cargo vehicle; and
transmitting (505) the recommended slot for delivery to a mobile device (320) of an operator of the cargo vehicle.

2. The method of Claim 1, further comprising:
receiving (509) a signal from the mobile device to open an entrance of the terminal when the cargo vehicle arrives at the terminal; and
in response to the signal, opening the entrance of the terminal to allow the cargo vehicle to enter the terminal.

3. The method of Claim 1, further comprising:
upon completion of the loading or unloading of the cargo at the terminal, wirelessly transmitting (513) a digitally-signed document to the mobile device.

4. The method of Claim 3, wherein the digitally-signed document comprises at least one of: a bill of lading and a filling advisory note.

5. The method of Claim 1, wherein the request for the slot identifies a desired time slot.

6. The method of Claim 1, wherein the recommended slot is determined based on a plurality of input parameters, the input parameters comprising a product availability and a measurement of existing traffic at the terminal.

7. A system (115) comprising:
at least one interface (316, 326, 336, 400) configured to receive a request associated with loading or unloading of cargo at a terminal (100); and
at least one processing device (312, 322, 332) configured to:
determine a recommended slot in response to the request, the recommended slot comprising a time slot for loading the cargo onto a cargo vehicle or unloading the cargo from the cargo vehicle; and
initiate transmission of the recommended slot for delivery to a mobile device (320) of an operator of the cargo vehicle.

8. The system of Claim 7, wherein the at least one processing device is further configured to:
receive a signal from the mobile device to open an entrance of the terminal when the cargo vehicle arrives at the terminal; and
in response to the signal, initiate opening of the entrance of the terminal to allow the cargo vehicle to enter the terminal.

9. The system of Claim 7, wherein the at least one processing device is further configured, upon completion of the loading or unloading of the cargo at the terminal, to initiate transmission of a digitally-signed document to the mobile device.

10. A non-transitory computer readable medium encoded with a computer program, the computer program comprising computer readable program code for:
receiving a request associated with loading or unloading of cargo at a terminal (100);
determining a recommended slot in response to the request, the recommended slot comprising a time slot for loading the cargo onto a cargo vehicle or unloading the cargo from the cargo vehicle; and
transmitting the recommended slot for delivery to a mobile device (320) of an operator of the cargo vehicle.
